# EUROPEAN PATENT APPLICATION

(11) **EP 1 283 158 A1**
(43) Date of publication of application: **12.02.2003**
(21) Application number: 01202972.4
(22) Date of filing: 06.08.2001
(51) Int. Cl.: B63B 21/22, B63B 21/50

(54) **Anchor line installation method and connector for use in said method**

(71) Applicant: SINGLE BUOY MOORINGS INC., CH-1723 Marly (CH)
(72) Inventor: Macrae, Michael, 06230 Villefranche sur mer (FR); Perratone, Renée, 06500 Menton (FR)
(74) Representative: Jorritsma, Ruurd

(57) **Abstract**

The invention relates to an anchor line installation method comprising the steps of:
- connecting the anchor line (2) to the seabed with an anchoring device (4),
- providing an anchor line part (7) on the floating structure (3),
- picking up the free end of the anchor line (2) with an installation vessel (1),
- providing a first connector element (10) on the free end of one of the anchor line (2) and the floating structure anchor line part (7), either prior or after picking up said free end,
- providing a second connector element (12) on the other of the anchor line (2) and the floating structure anchor line part (7),
- extending a pulling line (8) between the second connector element (12) and the installation vessel, the pulling line being engaged on the installation vessel (1) with the first connector element (10),
- lowering the first and second connector elements (10, 12) in the water from the installation vessel (1), and
- hauling in the pulling line (8) with a pulling device (13) on the installation vessel (1), thereby connecting the first and second connector elements (10, 12) below water level, in the upper half of the total water depth.
The installation method allows attachment of pre-installed anchor lines to floating constructions without the use of complex fairleads, chainstoppers and winches on board of the floating construction. Installation can be carried out below water level at increased levels of safety.

## Description

The invention relates to an anchor line installation method in which a pre-installed anchor line is attached to a floating construction such as a barge, a floating production storage and off-loading system, a semi-submersible platform, a loading/off-loading buoy or any other floating construction, which needs to be connected to the seabed.

From GB-2 258 852 it is known to connect a semi-submersible platform to a pre-installed anchor leg by attaching the end part of the pre-installed anchor leg to a temporary floating device via a pendant line. Upon hook-up, the end part of the anchor line is picked-up by the anchor handling vessel and is brought together with the end part of the anchor line section depending from the platform. On the anchor handling vessel, connection of the anchor line part of the platform with the anchor line part extending from the seabed is effected, for instance via a triple connection device.

From US-4,067,282 an anchoring method is known in which the anchor handling vessel picks-up the end of a pre-installed anchor line and of an anchor line part attached to the bow of a vessel and attaches both anchor lines on deck of the handling vessel.

Finally, from US-4,889,065 a method for pre-tensioning an anchor line near the seabed is known by horizontally tensioning said anchor line against an opposite anchor line on the seabed which carries at its end part a chain stopper. The chain of the first anchor line is pulled horizontally through said chain stopper by an anchor handling vessel and vertically upwards to the winch of the handling vessel, thereby effecting a substantially horizontal pre-tensioning of the anchor lines near the seabed.

The anchor lines of the known floating constructions are connected via an articulated fair lead/chainhawse/chainstopper combination and to a large winch on deck for pulling in the anchor line to achieve the correct tensioning. When the anchor line has the correct tension, the chain part at the top of the anchor line is fixed in position by the chain stopper, which is normally placed above the chain hawse or in integrated with the chain hawse design. In an alternative installation method, the pre-installed anchor line has been pre-tensioned by the winch on the anchor installation vessel.

The use of winches for tensioning to the anchor lines on the floating structure is relatively complex and expensive as chain winches or chain jacks with capacities of several tons are very expensive equipment. Furthermore, the combination of fairleads/chainhawse/chainstoppers is relatively complex.

It is an object of the present invention to provide a rapid and cheap anchor line connection method.

It is an further object of the present invention to provide in an anchor line connection method in which no fairleads/chainhawse/chainstopper and winches at the anchored floating structure need to be used for tensioning the anchor lines.

It is again an object of the present invention to provide an anchor line installation method with which polyester mooring legs can be installed without pre-tensioning.

It is furthermore an object of the present invention to provide a connector for use in the method.

Thereto, the method according to the present invention comprises the steps of:
- connecting the anchor line to the seabed with an anchoring device,
- providing an anchor line part on the floating structure
- picking up the free end of the anchor line with an installation vessel,
- providing a first connector element on the free end of one of the anchor line or the floating structure anchor line part, either prior to or after picking up said free end,
- providing a second connector element on the other of the anchor line or the floating structure anchor line part, a pulling line extending from the second connector element to the installation vessel,
- engaging the pulling line on the installation vessel with the first connector element,
- lowering the first and second connector elements in the water from the installation vessel, and
- connecting the pulling line to a pulling device on the installation vessel, and hauling in the pulling line, thereby connecting the first and second connector elements below water level, in the upper half of the total water depth.

The invention is based on the insight of using the winch present on the anchor line installation vessel for making the connection between the pre-installed anchor leg and the anchor line part of the floating structure. In contrast to the known anchor line installation method, the connector elements of the present invention are not connected on deck of the vessel but below water level. After one connector part has been connected to the other anchor line part on deck of the installation vessel, via a pulling line, the connector part is then put overboard. During pulling in, the pulling line is pulled through the connector element until the second connector element reaches the first connector element establishing mechanical connection. During pulling in of the pulling line, the anchor lines and the pulling lines are in the same vertical plane and a final mating and connection between the anchor lines part takes place in the water.

By the method of the present invention, the need for separate fairleads/chainhawses/chainstoppers and winches on the floating structure is obviated. The hook-up of all mooring legs can be carried out rapidly and effectively according to the method of the present invention. Furthermore, the new installation method allows a rapid exchange of damaged mooring lines or mooring lines which are past their service life. Connecting the connecting elements below water level results in an increased level of safety in case one of the highly tensioned anchor lines becomes undone or the connection fails. Furthermore, connecting the anchor lines below water level, in contrast to connection of the anchor lines on board of the vessel, results in improved force transmission from the winch on the vessel as such a winch and cable guide elements are laid out to handle large loads in a vertical direction. Hence, the method of the present invention can be carried out at an increased level of safety.

In a first embodiment the connector comprises a housing with a receiving opening, an attachment member for connecting to the anchor line, an outlet opening in a side wall, and a deflecting member for deflecting the pulling line entering the first connector element via the inlet opening from an axial direction to a transverse direction to the outlet opening.

In another embodiment the housing comprises a chainstopper, the second connector element being formed by a chain section. In an alternative embodiment, the housing comprises a resilient locking pawl movable in the transverse direction, or a recess in the inner housing wall, the second connector element comprising a plug member with a recess on its circumference for engaging with the locking pawl of the first connector element, or a resilient locking pawl for engaging with the recess of the first connector element. The use of a chainstopper allows applying a varying tensioning on the connected anchor lines.

Some embodiments of an anchor line installation method and connector for use in said method will be explained in detail by way of example with reference to the accompanying drawings. In the drawings:
Fig. 1 shows a schematic three-dimensional bottom view of the installation method of the present invention;
Fig. 2 a detail of the interconnected anchor lines shown in Fig. 1;
Fig. 3a shows a side view of the connector elements of Fig 2;
Fig. 3b shows a perspective detail of the connector element of Fig. 2;
Fig. 4a-4f show the different steps of the anchor line connection method of the present invention;
Fig 5 shows an embodiment of a connector of the present invention; and
Fig. 6 shows a preferred embodiment of the connector of the present invention.

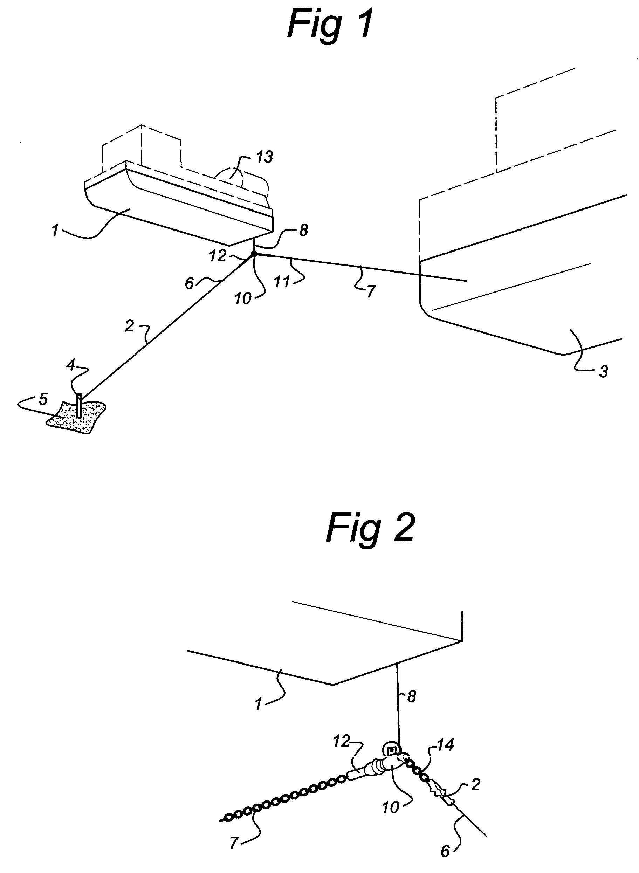

Fig. 1 shows an anchor handling vessel or installation vessel 1 attaching an anchor line 2 to a floating construction 3. The anchor line 2 is connected via an anchor 4 to the seabed 5 and has been pre-installed. The free end 6 of the anchor line 2 may be provided with a marker buoy floating at the water surface to be picked up by the installation vessel 1. An anchor line part 7 connected to the floating structure 3 is also picked up by the vessel 1 and is connected to a pulling line 8. The anchor line 2 is at its free end 6 provided with a first connector element 10 through which the pulling line 8 extends. The connector element 10 may be provided after picking up the anchor line 2 at the marker buoy or may be connected upon pre-installation of the anchor line 2, i.e. during hook up of the anchor line to the seabed 5. The free end 11 of anchor line 7 is provided with a second connector element 12 (see Fig. 2) the end of which is attached to the pulling line 8. By hauling in the pulling line 8 using the winch 13 on installation vessel 1, the connector element 12 is mated with the connector element 10 such that both anchor lines 2 and 7 are connected below water level.

As can be seen from Fig. 2, the anchor line 2 is at its free end 6 provided with a chain part 14. The anchor line 7 consists of chain links with at the end thereof the connector element 12.

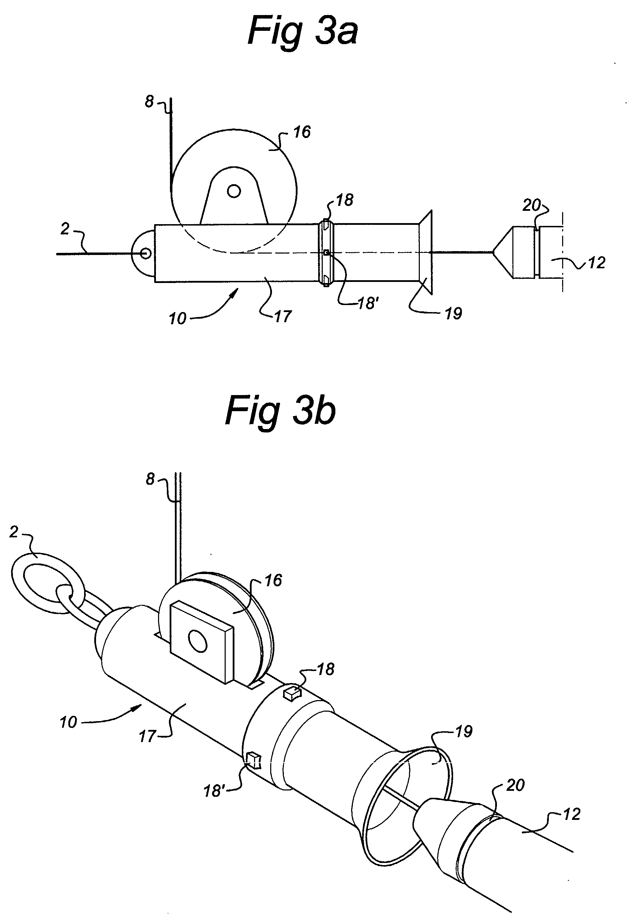

As can be seen from Fig. 3a, the connector element 10 comprises a deflecting member 16 such as a stationary or rotatable wheel deflecting the pulling line 8 from an axial direction to a substantially vertical direction.

As can be seen from Fig. 3b, the housing 17 of the connector 10 comprises resilient pawls 18, 18' which upon introduction of the connector 12 into the inlet opening 19 of the connector 10 lock into a circumferential recess 20 on the surface of connector 12.

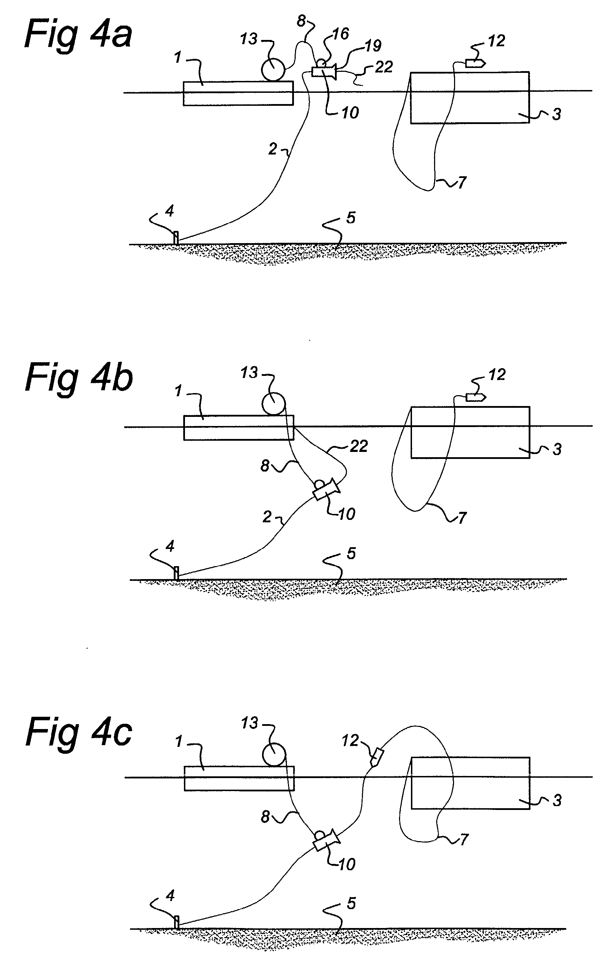

Fig. 4a schematically shows the first step of hook-up of anchor lines 2 and 7 according to the present invention. The installation vessel 1 approaches the floating structure 3 with the free end of the anchor line 2 secured to its deck. The connector element 10 is attached to the free end of anchor line 2 and the pulling line 8, which is wound around winch 13, is looped around deflecting member 16 from an outlet opening in the side wall of the housing 17 to the inlet opening 19. The free end 22 of the pulling line 8 is secured to the deck of the installation vessel 1. On the floating structure 3, the anchor line part 7 has been attached with at its free end to the connector 12.

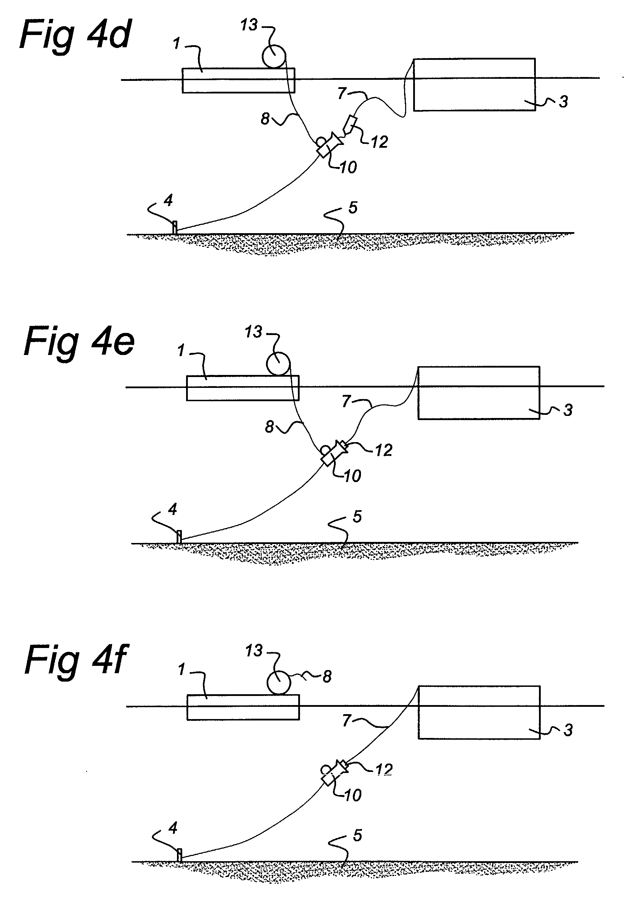

As can be seen in Fig. 4b, the connector 10 is lowered into the water until sufficient slack is achieved in anchor line 2 for the vessel 1 to approach the floating structure 3 sufficiently close for the anchor line part 7 and the connector 12 to be transferred to the deck of the installation vessel 1. Thereafter, as can be seen in Fig. 4c, the connector 12 is attached to the end part 22 of the pulling line 8 which is thereafter hauled in and wound on winch 13 as shown in Fig. 4d. By pulling in pulling line 8, and lowering connector 12 into the water, the anchor lines 2 and 7 are tightened and are connected as shown in Fig. 4e by connector 12 mating with connector 10. In the final step, the pulling line 8 is severed from the vessel 1 such that the final mooring configuration shown in Fig. 4f is reached.

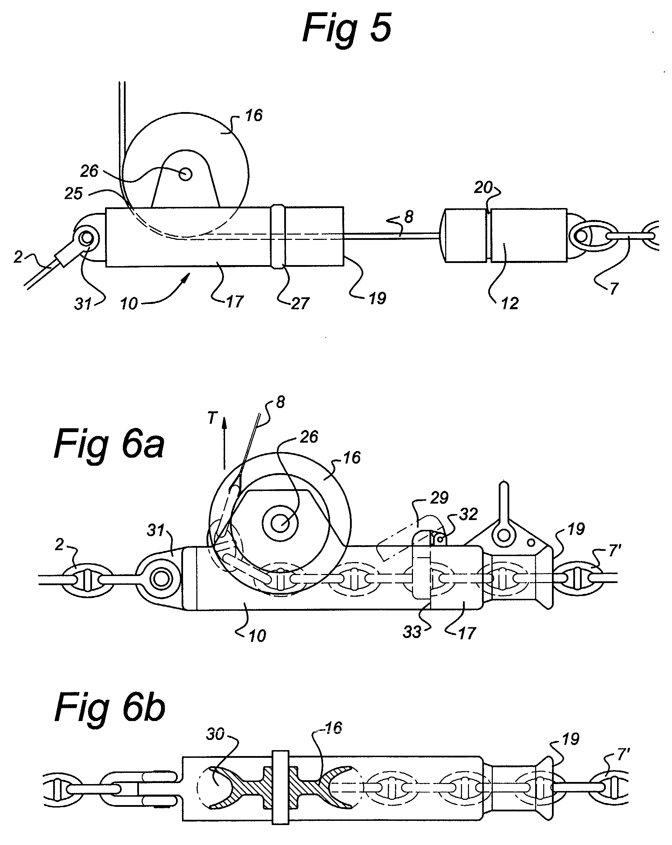

Fig. 5 shows an embodiment of the connectors 10 and 12. The connector 10 is attached to the anchor line 2 via shackle 31. The connector 10 comprises a hollow cylindral housing 17 into which the pulling cable 8 is introduced into the inlet opening 19 and exits through an outlet opening 25 in a side wall of the housing 17. The pulling cable 8 is guided around deflecting wheel 16, which is mounted on a transverse axle 26. A resilient locking ring 27 penetrates the wall of the housing 17 to engage with a recess 20 on the connector 12. Upon mating of the recess 20 with the locking ring 27, the connector 12 is fixedly connected within the housing 17.

Fig. 6 shows a side view and a top view of a preferred embodiment wherein the connector 10 comprises a sprocket 16 around which the chain 7 is guided. A chain stopper 29 allows movement of the chain 7 in the direction of the arrow T whereas movement in the opposite direction is blocked. The chain stopper 29 can pivot around transverse axis 32 between the release position and a vertically reoriented blocking position. The chain stopper 29 comprises a central slit through which the vertically directed chain links can pass, but which is narrower than the width of the transversely directed chain links. At the rear end, the connector 10 is provided with a connecting shackle 31 for attachment to the chain 2. The end part 7' of the chain 7 exits through an outlet opening 30 in the housing 17 in the direction of the installation vessel and is attached to the pulling line 8. By pulling the chain in the direction T via the pulling line 8, the tension in the anchor lines 2 and 7 can be adjusted.

In the anchor line installation procedure shown in Fig. 4a-4f, it is possible to use the connector shown in Fig. 6. In that case, the second connector 12 can be formed by the end chain part 7' of the anchor line 7. Hence, it is possible that no separate connector means are present and that the end section 7' of anchor chain 7 is used to be passed through the connector housing 10 and to be attached via chain stopper 29. It is in that case also possible to not use a separate pulling line 8', but to use the end part 7' of the chain 7 by connecting said chain to the winch 13.

It is also possible to exchange the positions of first and second connectors 10 and 12 in Fig. 4a-4f.

## Claims

1. Method of connecting an anchor line (2) to a floating structure (3), comprising the steps of:
- connecting the anchor line (2) to the seabed with an anchoring device (4),
- providing an anchor line part (7) on the floating structure (3),
- picking up the free end of the anchor line (2) with an installation vessel (1),
- providing a first connector element (10) on the free end of one of the anchor line (2) and the floating structure anchor line part (7), either prior to or after picking up said free end,
- providing a second connector element (12) on the other of the anchor line (2) and the floating structure anchor line part (7),
- extending a pulling line (8) between the second connector element (12) and the installation vessel, the pulling line being engaged on the installation vessel (1) with the first connector element (10),
- lowering the first and second connector elements (10, 12) in the water from the installation vessel (1), and
- hauling in the pulling line (8) with a pulling device (13) on the installation vessel (1), thereby connecting the first and second connector elements (10, 12) below water level, in the upper half of the total water depth.

2. Method according to claim 1, the first connector element (10) comprising a housing (17) with a receiving opening (19), an attachment member (31) for connecting to the anchor line (2), an outlet opening (25, 30) in a side wall, and a deflecting member (16) for deflecting the pulling line (8) entering the first connector element (10) via the inlet opening (19) from an axial direction to a transverse direction to the outlet opening (25, 30).

3. Method according to claim 2, the first connector element (10) comprising a blocking member (29) for allowing movement of the second connector element (7') within the housing (17) in the direction of the pulling force (T) on the pulling line (8), and blocking movement of the second connector element (7') in a direction opposite to the pulling force (T) on the pulling line

4. Method according to claim 3, the second connector element comprising a chain section (7').

5. Method according to claim 2, the first connector element (10) comprising a resilient locking pawl (18, 18', 27) movable in the transverse direction, or a recess in the inner housing wall, the second connector element (12) comprising a plug member with a recess (20) on its circumference for engaging with the locking pawl (18, 18', 27) of the first connector element (10), or a resilient locking pawl for engaging with the recess of the first connector element.

6. Method according to any of the preceding claims, wherein the first connector element (10) is attached to the anchor line (2), the second connector element being on one side attached to the anchor line (7) of the floating structure and on the other side to a rope or wire pulling line (8).

7. Method according to any of the preceding claims, the anchor line (2) comprising a rope or wire anchor line, the anchor line (7) of the floating structure comprising a chain.

8. Method according to claim 7, wherein the anchor line (2) has not been pre-tensioned, a predetermined pulling force being exerted on the pulling line (8) for causing an elongation of the anchor line (2).

9. Method according to any of the preceding claims, wherein the anchor line part (7) is connected to the floating structure (3) without a fairlead.

10. Method according to any of the preceding claims, a wherein the anchor line part (7) is connected to the floating structure (3) without a being connected to a winch on the floating structure.

11. Connector (10, 12) for use in the method according to any of the preceding claims having a housing (17) with on a front side a receiving opening (19), on a rear side an an attachment member (31) for connecting to an anchor line, axially aligned with the inlet opening, an outlet opening (25, 30) in a side wall, a guide wheel (16) placed in the outlet opening (25, 30) and having an axis (26) transverse to the axial direction, for deflecting a pulling line (8) or anchor line (7') entering the connector housing (17) via the inlet opening (19) from an axial direction to a transverse direction to the outlet opening (25, 30).

12. Connector according to claim 11, wherein the guide wheel (16) is rotatable around the axis (26).

13. Connector according to claim 11 or 12, wherein the guide wheel (16) comprises a chain wheel, a resilient pawl (29) being pivotably mounted on a transverse axis (32) between a blocking position engaging with a chain link upon pulling a chain (7') in the housing (17) in a direction from the outlet opening (30) to the inlet opening (19), and abutting against a blocking member (33) for preventing movement of the pawl (29) and the chain (7') toward the inlet opening (19), and a release position by pivoting towards the outlet opening (30) to be substantially spaced away from the chain (7') in the connector housing (17).
